# EUROPÄISCHE PATENTSCHRIFT

(11) **EP 0 981 259 B1**
(45) Veröffentlichungstag und Bekanntmachung des Hinweises auf die Patenterteilung: **13.07.2011**
(21) Anmeldenummer: 99116201.7
(22) Anmeldetag: 17.08.1999
(51) Int. Cl.: H04Q 11/04, H04M 1/74

(54) **Vorrichtung zum Schutz einer Spannungsversorgungseinheit vor Überspannungen**
Apparatus for overvoltage protection of a power supply unit
Dispositif pour la protection contre les surtensions d'une unité d'alimentation

(30) Priorität: 20.08.1998 DE 19837820
(43) Veröffentlichungstag der Anmeldung: 23.02.2000
(73) Patentinhaber: Tenovis GmbH & Co. KG, 60362 Frankfurt am Main (DE)
(72) Erfinder: Friedrich, Klaus-Georg, 61130 Niedderau-Heldenbergen (DE)
(74) Vertreter: Hafner-Tergau-Walkenhorst

(56) Entgegenhaltungen:
- EP-A- 0 635 923
- DE-A1- 4 326 596
- DE-A1- 4 433 045
- US-A- 5 003 588

## Beschreibung

### Stand der Technik

Die Erfindung geht von einer Vorrichtung zum Schutz einer Spannungsversorgungseinheit vor Überspannungen nach der Gattung des Hauptanspruchs aus.

Solches System ist zum Beispiel offenbart im Dokument DE 43 26 596 A1*.*

Von der Firma Bosch Telecom ist bereits die Nebenstellenanlage Integral 33 E bekannt, die mehrere digitale Teilnehmeranschlußorgane für ISDN-Teilnehmeranschlüsse umfaßt. Dabei ist den Teilnehmeranschlußorganen über jeweils eine Speiseleitung eine negative Speisespannung zugeführt. Jede Speiseleitung ist dabei durch ein eigenes spannungsbegrenzendes Blitzschutzelement in Form eines Triac vor Überspannungen geschützt.

### Vorteile der Erfindung

Die erfindungsgemäße Vorrichtung mit den Merkmalen des Hauptanspruchs hat demgegenüber den Vorteil, daß jede Speiseleitung über jeweils eine Diode, die bezüglich der Speisespannung in Durchlaßrichtung gepolt ist, mit einem für alle Speiseleitungen gemeinsamen spannungsbegrenzenden Element verbunden ist, dessen Begrenzungsspannung so gewählt ist, daß im Falle von auf einer der Speiseleitungen auftretenden Überspannungen diese auf einen vorgegebenen Wert begrenzt werden, der betragsmäßig über der Speisespannung liegt, wobei das gemeinsame spannungsbegrenzende Element als Zenerdiode ausgebildet ist, die bezüglich der Speisespannung in Sperrichtung gepolt ist, wobei die Zenerspannung der Zenerdiode allein oder zusammen mit der Durchlassspannung der jeweiligen Diode betragsmässig über der Speisespannung liegt.

Durch die Verwendung jeweils einer dem gemeinsamen spannungsbegrenzenden Element vorgeschalteten Diode, die bezüglich der Speisespannung in Durchlaßrichtung gepolt ist, wird ein Überkoppeln von Überspannungen von einer Speiseleitung auf eine andere Speiseleitung verhindert.

Durch die in den Unteransprüchen aufgeführten Maßnahmen sind vorteilhafte Weiterbildungen und Verbesserungen der im Hauptanspruch angegebenen Vorrichtung möglich.

Besonders vorteilhaft ist es, daß jeder Speiseleitung ein Speisestrom über einen Speisestrombegrenzer zugeführt wird und daß die jeweilige Diode zwischen dem jeweiligen Speisestrombegrenzer und dem zugehörigen Teilnehmeranschluß angeschlossen und über das gemeinsame spannungsbegrenzende Element mit einem Bezugspotential verbunden ist. Auf diese Weise läßt sich der Speisestrom vor Überstrom z. B. bei Kurzschluß mittels des jeweiligen Speisestrombegrenzers schützen. Zudem wird der jeweilige Speisestrombegrenzer selbst durch das gemeinsame spannungsbegrenzende Element vor Überspannungen und somit vor Zerstörung geschützt, vor allem dann wenn es sich bei dem jeweiligen Speisestrombegrenzer um einen integrierten Schaltkreis handelt.

Ein weiterer Vorteil besteht darin, daß zwischen dem jeweiligen Speisestrombegrenzer und dem zugehörigen Teilnehmeranschluß jeweils eine weitere Diode angeschlossen ist, die andererseits mit dem Bezugspotential verbunden ist und bezüglich der Speisespannung in Sperrichtung gepolt ist. Auf diese Weise wird die Spannungsversorgungseinheit mit den Speisestrombegrenzern auch vor Überspannungen mit im Vergleich zur Speisespannung umgekehrtem Vorzeichen geschützt, da diese Überspannungen von der jeweils weiteren Diode begrenzt werden.

Ein weiterer Vorteil besteht darin, daß dem jeweiligen Strombegrenzer auf der Seite des zugehörigen Teilnehmeranschlusses jeweils eine weitere Diode vorgeschaltet ist, die so gepolt ist, daß sie sperrt, wenn ein vom jeweiligen Teilnehmeranschluß zugeführtes Potential betragsmäßig größer als die Speisespannung ist, sofern dieses Potential gleiches Vorzeichen wie die Speisespannung aufweist. Auf diese Weise wird der jeweilige Strombegrenzer bei Überspannung mit gleichem Vorzeichen wie die Speisespannung vom zugehörigen Teilnehmeranschluß entkoppelt und somit vor der Überspannung geschützt.

### Zeichnung

Ein Ausführungsbeispiel der Erfindung ist in der Zeichnung dargestellt und in der nachfolgenden Beschreibung näher erläutert. Es zeigen Figur 1 einen Schaltplan einer erfindungsgemäßen Vorrichtung, Figur 2 ein erstes Ausführungsbeispiel für ein gemeinsames spannungsbegrenzendes Element und Figur 3 ein zweites Ausführungsbeispiel für ein gemeinsames spannungsbegrenzendes Element.

### Beschreibung des Ausführungsbeispiels

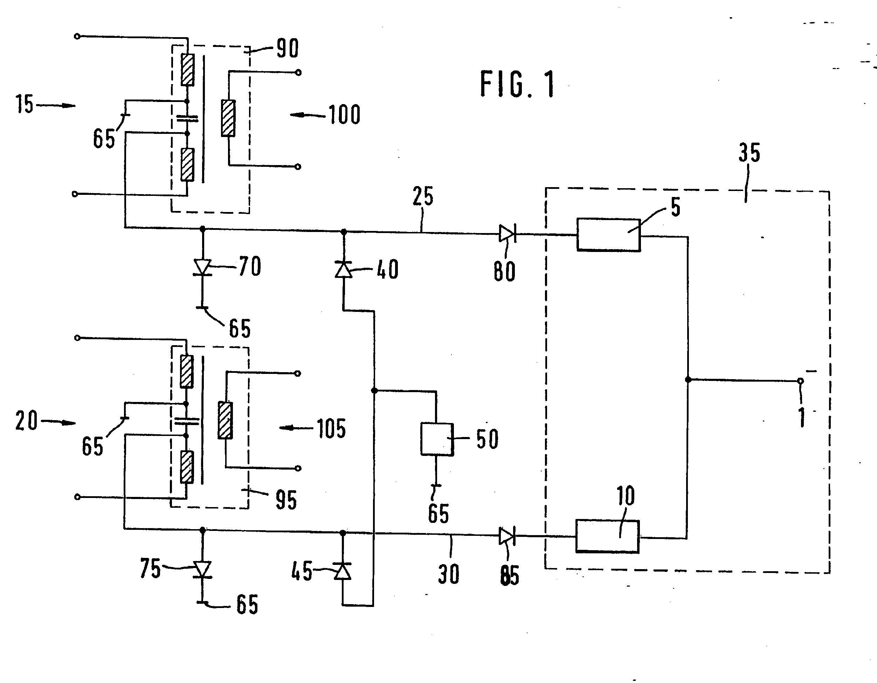

In Figur 1 ist eine Schaltungsanordnung eines Teiles einer Nebenstellenanlage dargestellt. Die Nebenstellenanlage umfaßt dabei einen ersten Teilnehmeranschluß 15, der über einen ersten, nicht näher beschriebenen Übertrager 90 mit einem ersten Koppelfeldanschluß 100 und weiteren in Figur 1 nicht dargestellten Komponenten der Nebenstellenanlage zusammenwirkt und dem von einer in der Zeichnung als Minuspol (-) dargestellten Spannungsversorgung 1 über eine erste Speiseleitung 25 eine negative Speisespannung von beispielsweise -48V zugeführt ist. Mit der Spannungsversorgung 1 ist ein erster Strombegrenzer 5 verbunden, der die Aufgabe hat, den Speisestrom für die erste Speiseleitung 25 zu begrenzen und den Stromfluß zu unterbrechen, wenn für eine vorgegebene Zeit ein Überstrom, beispielsweise durch Kurzschluß auf der ersten Speiseleitung 25 fließt. Zwischen dem ersten Teilnehmeranschluß 15 und dem ersten Strombegrenzer 5 ist am die erste Speiseleitung 25 die Kathode einer ersten Diode 40 angeschlossen, deren Anode über ein gemeinsames spannungsbegenzendes Element 50 mit einem Bezugspotential 65 verbunden ist.

Die Nebenstellenanlage umfaßt außerdem einen zweiten Teilnehmeranschluß 20, der über einen nicht näher beschriebenen zweiten Übertrager 95 mit einem zweiten Koppelfeldanschluß 105 und weiteren in Figur 1 nicht dargestellten Komponenten der Nebenstellenanlage zusammenwirkt. Der erste Koppelfeldanschluß 100 und der zweite Koppelfeldanschluß 105 sind über in Figur 1 nicht dargestellte Komponenten auf ein gemeinsames Koppelfeld der Nebenstellenanlage geführt. An den ersten Teilnehmeranschluß 15 und an den zweiten Teilnehmeranschluß 20 ist jeweils ein Telekommunikationsendgerät anschließbar. Bei einer analogen Nebenstellenanlage ist an den ersten Teilnehmeranschluß 15 und an den zweiten Teilnehmeranschluß 20 jeweils ein analoges Telekommunikationsendgerät anschließbar. Bei einer digitalen Nebenstellenanlage ist an den ersten Teilnehmeranschluß 15 und an den zweiten Teilnehmeranschluß 20 jeweils ein digitales Telekommunikationsendgerät beispielsweise ein ISDN-Telekommunikationsendgerät anschließbar, wobei dann der erste Teilnehmeranschluß 15 und der zweite Teilnehmeranschluß 20 jeweils als ISDN-Teilnehmeranschluß ausgebildet sind. Dem zweiten Teilnehmeranschluß 20 ist über eine zweite Speiseleitung 30 ebenfalls eine Speisespannung aus der Spannungsversorgung 1 zugeführt. Die Speisespannung auf der zweiten Speiseleitung 30 entspricht daher im wesentlichen der Speisespannung auf der ersten Speiseleitung 25 und beträgt im beschriebenen Ausführungsbeispiel -48V. An die Spannungsversorgung 1 ist auch ein zweiter Strombegrenzer 10 angeschlossen, der den Speisestrom auf der zweiten Speiseleitung 30 begrenzt und abschaltet, wenn für eine weitere vorgegebene Zeit ein Überstrom beispielsweise durch Kurzschluß auf der zweiten Speiseleitung 30 fließt. Zwischen dem zweiten Teilnehmeranschluß 20 und dem zweiten Strombegrenzer 10 ist an die zweite Speiseleitung 30 die Kathode einer zweiten Diode 45 angeschlossen, deren Anode über das gemeinsame spannungsbegrenzende Element 50 mit dem Bezugspotential 65 verbunden ist. Die Spannungsversorgung 1, der erste Strombegrenzer 5 und der zweite Strombegrenzer 10 bilden eine Spannungsversorgungseinheit 35, die vor Überspannungen, die beispielsweise durch Blitzschlag bedingt sein können, auf der ersten Speiseleitung 25 und/oder auf der zweiten Speiseleitung 30 durch die erfindungsgemäße Vorrichtung geschützt werden soll. Überspannungen sind Spannungen, die betragsmäßig über der Speisespannung liegen und gleiches Vorzeichen wie die Speisespannung haben oder die unabhängig vom Betrag umgekehrtes Vorzeichen wie die Speisespannung haben.

Dazu wird die an das gemeinsame spannungsbegrenzende Element 50 anlegbare Spannung auf eine Begrenzungsspannung begrenzt, die allein oder zusammen mit der Durchlaßspannung der ersten Diode 40 bzw. der zweiten Diode 45 betragsmäßig über der Speisespannung von -48V liegt. Im Falle von auf einer oder beiden Speiseleitungen 25, 30 auftretenden Überspannungen werden diese dann auf die Summe aus der Durchlaßspannung der ersten Diode 40 bzw. aus der Durchlaßspannung der zweiten Diode 45 und der Begrenzungsspannung des gemeinsamen spannungsbegrenzenden Elements 50 begrenzt. Die Begrenzungsspannung beträgt dabei beispielsweise -62 Volt und liegt damit bereits ohne die Durchlaßspannung der ersten Diode 40 bzw. der zweiten Diode 45 von ca. 0,7V betragsmäßig über der Speisespannung von -48V. Eine betragsmäßig größere Spannung als 62,7V kann somit von den Speiseleitungen 25, 30 dem jeweiligen Strombegrenzer 5,10 nicht zugeführt werden, so daß die Strombegrenzer 5,10 vor entsprechenden Überspannungen geschützt sind. Dies ist vor allem dann von Bedeutung, wenn die Strombegrenzer 5,10 integrierte Schaltkreise enthalten, die bei entsprechenden Überspannungen zerstört werden können.

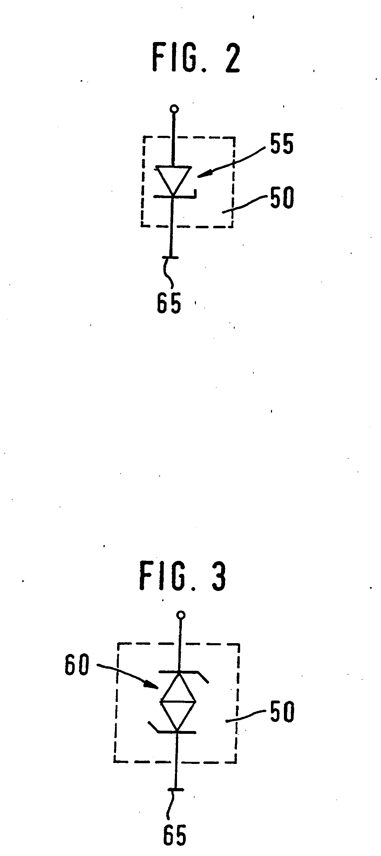

Gemäß Figur 2 kann das gemeinsame spannungsbegrenzende Element 50 als Zenerdiode 55 ausgebildet sein, deren Anode mit der Anode der ersten Diode 40 und der Anode der zweiten Diode 45 verbunden ist und deren Kathode mit dem Bezugspotential 65 verbunden ist. Im Gegensatz zur ersten Diode 40 und zur zweiten Diode 45, die bezüglich der Speisespannung von -48V in Durchlaßrichtung gepolt sind, ist die Zenerdiode 55 somit bezüglich der Speisespannung von -48V in Sperrichtung gepolt. Die Zenerspannung der Zenerdiode 55 liegt dabei entweder allein oder zusammen mit der Durchlaßspannung der ersten Diode 40 bzw. zusammen mit der Durchlaßspannung der zweiten Diode 45 ebenfalls betragsmäßig über der Speisespannung. Im beschriebenen Beispiel kann die Zehnerspannung

bei -62V liegen, so daß sie bereits allein beragsmäßig über der Speisespannung liegt. Überspannungen auf der ersten Speiseleitung 25 und auf der zweiten Speiseleitung 30 werden so betragsmäßig ebenfalls auf 62,7V begrenzt.

Gemäß einem zweiten Ausführungsbeispiel nach Figur 3 kann das gemeinsame spannungsbegrenzende Element 50 auch als zündbares Halbleiterbauelement 60, beispielsweise als Triac oder als Thyristor, ausgebildet sein. Das zündbare Halbleiterbauelement 60 ist dabei so geschaltet, daß seine Zündspannung in Richtung der Speisespannung gepolt ist und allein oder zusammen mit der Durchlaßspannung der ersten Diode 40 bzw. zusammen mit der Durchlaßspannung der zweiten Diode 45 betragsmäßig über der Speisespannung liegt. Im beschriebenen Ausführungsbeispiel beträgt die Zündspannung -62V, so daß sie betragsmäßig bereits allein über der Speisespannung von -48V liegt. Auch mittels des zündbaren Halbleiterbauelementes 60 werden Überspannungen auf der ersten Speiseleitung 25 und auf der zweiten Speiseleitung 30 im beschriebenen Ausführungsbeispiel auf 62,7V betragsmäßig begrenzt. Liegt also auf der ersten Speiseleitung 25 oder auf der zweiten Speiseleitung 30 eine negative Überspannung von -62,7V an, so zündet das zündbare Halbleiterbauelement 60. Dies führt zu einem Impedanz- und somit Spannungseinbruch am zündbaren Halbleiterbauelement 60 und damit zu einem Kurzschlußstrom durch das zündbare Halbleiterbauelement 60, so daß der erste Strombegrenzer 5 bzw. der zweite Strombegrenzer 10 vor Überstrom durch die Überspannung auf der zugehörigen Speiseleitung 25, 30 geschützt ist.

Tritt auf der ersten Speiseleitung 25 eine negative Überspannung auf, deren Betrag ausreicht, der Zenerdiode 55 die Zehnerspannung bzw. dem zündbaren Halbleiterbauelement 60 die Zündspannung zuzuführen, so kann die entsprechende Überspannung nicht auf die zweite Speiseleitung 30 überkoppeln, da die zweite Diode 45 durch diese Überspannung gesperrt wird. Aus gleichem Grund kann umgekehrt eine entsprechende Überspannung auf der zweiten Speiseleitung 30 nicht auf die erste Speiseleitung 25 übergekoppelt werden, da in diesem Fall die erste Diode 40 sperrt.

Es kann zusätzlich vorgesehen sein, wie in Figur 1 dargestellt, die Kathode der ersten Diode 40 mit der Anode einer dritten Diode 70 zu verbinden, deren Kathode an das Bezugspotential 65 angeschlossen ist. Genauso kann gemäß Figur 1 auch die Kathode der zweiten Diode 45 mit der Anode einer vierten Diode 75 verbunden sein, deren Kathode ebenfalls an das Bezugspotential 65 angeschlossen ist. Bezüglich der Speisespannung von -48V sind die dritte und die vierte Diode 70, 75 in Sperrichtung gepolt. Die dritte Diode 70 schützt dabei den ersten Strombegrenzer 5 vor positiven Überspannungen auf der ersten Speiseleitung 25, indem sie sie auf ihre Durchlaßspannung von 0,7V begrenzt. Die vierte Diode 75 schützt den zweiten Strombegrenzer 10 vor positiven Überspannungen auf der zweiten Speiseleitung 30, indem sie solche Überspannungen ebenfalls auf ihre Durchlaßspannung von 0,7V begrenzt.

Es kann weiterhin vorgesehen sein, die Kathode der ersten Diode 40 mit der Anode einer fünften Diode 80 zu verbinden, deren Kathode mit dem ersten Strombegrenzer 5 verbunden ist. Genauso kann es weiterhin vorgesehen sein, die Kathode der zweiten Diode 45 mit der Anode einer sechsten Diode 85 zu verbinden, deren Kathode mit dem zweiten Strombegrenzer 10 verbunden ist. Somit ist dem jeweiligen Strombegrenzer 5, 10 auf der Seite des zugehörigen Teilnehmeranschlusses 15, 20 die fünfte Diode 80 bzw. die sechste Diode 85 vorgeschaltet, die so gepolt ist, daß sie sperrt, wenn ein vom entsprechenden Teilnehmeranschluß 15, 20 zugeführtes Potential betragsmäßig größer als die Speisespannung ist,

sofern dieses Potential gleiches Vorzeichen wie die Speisespannung aufweist. Für den Fall der Verwendung der Zenerdiode 55 für das gemeinsame spannungsbegrenzende Element 50 mit einer Zenerspannung von -62V sind Überspannungen auf der ersten Speiseleitung 25 und auf der zweiten Speiseleitung 30 auf -62,7V begrenzt. Bei einem Potential von -48V an der Kathode der fünften Diode 80 bzw. der sechsten Diode 85 aufgrund der Speisespannung von der Spannungsversorgung 1 ist daher die fünfte Diode 80 bzw. die sechste Diode 85 bei Überspannungen auf der Speiseleitung 25 bzw. auf der zweiten Speiseleitung 30, die betragsmäßig größer als der Betrag der Speisespannung von 48V sind und gleiches Vorzeichen wie die Speisespannung haben, in Sperrichtung gepolt. Auf diese Weise entkoppelt die fünfte Diode 80 den ersten Strombegrenzer 5 bei Überspannungen auf der ersten Speiseleitung 25 vom ersten Teilnehmeranschluß 15. Die sechste Diode 85 entkoppelt entsprechend den zweiten Strombegrenzer 10 bei Überspannungen auf der zweiten Speiseleitung 30 vom zweiten Teilnehmeranschluß 20. Auf diese Weise werden der erste Strombegrenzer 5 und der zweite Strombegrenzer 10 vor den Überspannungen auf der ersten Speiseleitung 25 bzw. auf der zweiten Speiseleitung 30 bei Verwendung der Zenerdiode 55 als gemeinsames spannungsbegrenzendes Element 50 geschützt.

Bei Verwendung des zündbaren Halbleiterelementes 60 für das gemeinsame spannungsbegrenzende Element 50 bricht bei Erreichen der Zündspannung aufgrund von Überspannungen auf der ersten Speiseleitung 25 bzw. auf der zweiten Speiseleitung 30 die Spannung am zündbaren Halbleiterelement 60 zusammen. Damit bricht auch die Spannung auf derjenigen Speiseleitung zusammen, auf der die Überspannung auftrat, so daß die dem ersten Spannungsbegrenzer 5 vorgeschaltete fünfte Diode 80 bzw. die dem zweiten Spannungsbegrenzer 10 vorgeschaltete sechste Diode 85 zu leiten beginnt, je nachdem, auf welcher der beiden Speiseleitungen 25, 30 die Überspannung auftrat. Dies stellt jedoch kein Problem dar, da der Strom im wesentlichen über das zündbare Halbleiterelement 60 abgeführt wird.

Die Erfindung ist nicht auf eine Vorrichtung beschränkt, bei der zwei Teilnehmeranschlüße an das Koppelfeld einer Nebenstellenanlage angeschlossen sind. Vielmehr kann das gemeinsame spannungsbegrenzende Element 50 auch für mehr als zwei Teilnehmeranschlüsse verwendet werden, deren jeweilige Speiseleitung in der beschriebenen Form mit dem gemeinsamen spannungsbegrenzenden Element 50 zu verbinden ist. Die Teilnehmeranschlüsse können dabei auch Teil einer nicht unbedingt als Nebenstellenanlage ausgebildeten beliebigen Telekommunikationsanlage gegebenenfalls mit Koppelfeldanschlüssen sein.

Gemäß Figur 1 sind die Teilnehmeranschlüsse 15, 20 als Zweidrahtanschlüsse dargestellt. Es können jedoch auch Vierdraht-Schnittstellen als Teilnehmeranschluß jeweils Verwendung finden.

Die Durchlaßspannung der Dioden ist nicht auf 0,7V festgelegt, sondern kann beispielsweise im Bereich von 0,7V bis 1V variieren und beeinflußt damit natürlich die auf der ersten Speiseleitung 25 bzw. auf der zweiten Speiseleitung 30 betragsmäßig maximal mögliche Überspannung bei gleichem Vorzeichen wie die Speisespannung.

Bei einer Speisespannung der Spannungsversorgung 1 mit positivem Vorzeichen ist die Polungsrichtung sämtlicher Dioden im gemäß Figur 1 beschriebenen Ausführungsbeispiel umzukehren, genauso wie die Polungsrichtung des als Zenerdiode 55 ausgebildeten gemeinsamen spannungsbegrenzenden Elementes 50 bzw. der Zündspannung des als zündbares Halbleiterelement 60 ausgebildeten gemeinsamen spannungsbegrenzenden Elementes 50.

## Patentansprüche

1. Vorrichtung zum Schutz einer Spannungsversorgungseinheit (35) mindestens zweier Teilnehmeranschlüsse (15, 20) für den Anschluss jeweils eines Telekommunikationsendgerätes an eine Nebenstellenanlage, vor Überspannungen, wobei zu jedem Teilnehmeranschluss (15, 20) eine
Speiseleitung (25, 30) von einer gemeinsamen Spannungsversorgung (1) vorgesehen ist, auf der dem jeweiligen Teilneitmeranschluss (15, 20) eine Speisespannung zuführbar ist, dass jede Speiseleitung (25, 30) über jeweils eine Diode (40, 45), die bezüglich der Speisespannung in Durchlassrichtung gepolt Ist, mit einem für alle Speiseleitungen (25, 30) gemeinsamen spannungsbegrenzenden Element (50) verbunden ist, dessen Begrenzungsspannung so gewählt ist, dass im Falle von auf einer der Speiseleitungen (25, 30) auftretenden Überspannungen diese auf einen vorgegebenen Wert begrenzt werden, der betragsmässig über der Speisespannung liegt, wobei das gemeinsame spannungsbegrenzende Element (50) als Zenerdiode (55) ausgebildet ist, die bezüglich der Speisespannung in Sperrichtung gepolt ist, wobei die Zenerspannung der Zenerdiode (55) allein oder zusammen mit der Durchlassspannung der jeweiligen Diode (40, 45) betragsmässig über der Speisespannung liegt.

2. Vorrichtung nach Anspruch 1, **dadurch gekennzeichnet, dass** jeder Speiseleitung (25, 30) ein Speisestrom über einen Speisestrombegrenzer (5, 10) zugeführt wird und dass die jeweilige Diode (40, 45) zwischen dem jeweiligen Speisestrombegrenzer (5, 10) und dem zugehörigen Teilnehmeranschluss (15, 20) angeschlossen und über das gemeinsame spannungsbegrenzende Element (50) mit einem Bezugspotential (65) verbunden ist.

3. Vorrichtung nach Anspruch 2, **dadurch gekennzeichnet, dass** zwischen dem jeweiligen Speisestrombegrenzer (5, 10) und dem zugehörigen Teilnehmeranschluss (15, 20) jeweils eine weitere Diode (70, 75) angeschlossen ist, die andererseits mit dem Bezugspotential (65) verbunden ist und bezüglich der Speisespannung in Sperrichtung gepolt ist.

4. Vorrichtung nach Anspruch 2 oder 3, **dadurch gekennzeichnet, dass** dem jeweiligen Strombegrenzer (5, 10) auf der Seite des zugehörigen Teilnehmeranschlusses (15, 20) jeweils eine weitere Diode (80, 85) vorgeschaltet ist, die so gepolt ist, dass sie sperrt, wenn ein vom jeweiligen Teilnehmeranschluss (15, 20) zugeführtes Potential betragsmässig grösser als die Speisespannung ist, sofern dieses Potential gleiches Vorzeichen wie die Speisespannung aufweist.

## Claims

1. A device for protecting a voltage supply unit (35) of at least two subscriber lines (15, 20) for connecting one telecommunications terminal each to a private branch exchange, against overvoltages, one supply line (25, 30) of a common voltage supply (1) being provided for each subscriber line (15, 20), by which a supply voltage can be supplied to the respective subscriber line (15, 20), each supply line (25, 30) being connected via one diode (40, 45) each, which is forward polarized with regard to the supply voltage, with a voltage-limiting element (50) which is common to all supply lines (25, 30) and whose limiting voltage is selected such that in case of overvoltages occurring in any of the supply lines (25, 30), said overvoltages are limited to a predetermined value, which is higher in amount than the supply voltage, the common voltage-limiting element (50) being formed as a Zener diode (55), which is reverse polarized with regard to the supply voltage, the Zener voltage of the Zener diode (55) alone or together with the conducting-state voltage of the respective diode (40, 45) being higher in amount than the supply voltage.

2. The device of claim 1, **characterized in that** a supply current is fed to each supply line (25, 30) via a supply-current limiter (5, 10) and that the respective diode (40, 45) is wired between the respective supply-current limiter (5, 10) and the associated subscriber line (15, 20) and is connected via the common voltage-limiting element (50) with a reference potential (65).

3. The device of claim 2, **characterized in that** another diode (70, 75) is wired in each case between the respective supply-current limiter (5, 10) and the associated subscriber line (15, 20), said diode (70, 75) being connected, on the other side, with the reference potential (65) and being reverse polarized with regard to the supply voltage.

4. The device of claim 2 or 3, **characterized in that** another diode (80, 85) is connected in each case upstream of the respective current limiter (5, 10) on the side of the associated subscriber line (15, 20), said diode (80, 85) being polarized such that it blocks if a potential fed from the respective subscriber line (15, 20) is higher in amount than the supply voltage, provided that said potential has the same polarity sign as the supply voltage.

## Revendications

1. Dispositif pour protéger une unité d'alimentation en tension (35) d'au moins deux raccordements d'abonné (15, 20) pour raccorder un terminal de télécommunication à chaque fois à une installation téléphonique privée, contre des surtensions, une ligne d'alimentation (25, 30) d'une alimentation en tension (1) commune étant prévue pour chaque raccordement d'abonné (15, 20), par laquelle une tension d'alimentation peut être alimentée à chaque raccordement d'abonné (15, 20), chaque ligne d'alimentation (25, 30) étant connectée au moyen d'une diode (40, 45), qui est polarisée dans le sens passant relativement à la tension d'alimentation, à un élément limiteur de tension (50) qui est commun à toutes les lignes d'alimentation (25, 30) et dont la tension de limitation est choisie de façon qu'en cas de surtensions surgissant dans l'une des lignes d'alimentation (25, 30), dites surtensions sont limitées à une valeur prédéterminée qui est plus élevée en montant que la tension d'alimentation, l'élément limiteur de tension (50) commun étant formé comme diode de Zener (55), qui est polarisée dans le sens d'état bloqué relativement à la tension d'alimentation, la tension de Zener de chaque diode de Zener (55) seule ou ensemble avec la tension à l'état passant de la diode (40, 45) respectif étant plus élevée en montant que la tension d'alimentation.

2. Dispositif selon la revendication 1, **caractérisé en ce qu'**un courant d'alimentation est alimenté à chaque ligne d'alimentation (25, 30) par un limiteur de courant d'alimentation (5, 10) et **en ce que** la diode (40, 45) respective est branchée entre le limiteur de courant d'alimentation (5, 10) respectif et le raccordement d'abonné (15, 20) y affecté et est connectée par l'élément limiteur de tension (50) commun à un potentiel de référence (65).

3. Dispositif selon la revendication 2, **caractérisé en ce qu'**une autre diode (70, 75) est branchée à chaque fois entre le limiteur de courant d'alimentation (5, 10) respectif et le raccordement d'abonné (15, 20), dite diode (70, 75) étant connectée, de l'autre côté, au potentiel de référence (65) et étant polarisée dans le sens d'état bloqué relativement à la tension d'alimentation.

4. Dispositif selon la revendication 2 ou 3, **caractérisé en ce qu'**une autre diode (80, 85) est connectée en avant du limiteur de courant d'alimentation (5, 10) respectif du côté du raccordement d'abonné (15, 20) y affecté, dite diode (80, 85) étant polarisée de façon qu'elle bloque si un potentiel alimenté du raccordement d'abonné (15, 20) respectif est plus élevée en montant que la tension d'alimentation, pourvu que dite potentiel ait le même signe de polarité que la tension d'alimentation.
